# FASCICULE DE BREVET EUROPEEN

(11) **EP 0 859 158 B1**
(45) Date de publication et mention de la délivrance du brevet: **19.05.2004**
(21) Numéro de dépôt: 98400349.1
(22) Date de dépôt: 16.02.1998
(51) Int. Cl.: F16C 1/14, F16C 1/22, F16C 11/06

(54) **Dispositif pour raccorder un embout d'un câble de commande à distance à une rotule, et son application à la commande d'une boîte de vitesse**
Vorrichtung zum Verbinden das Endstück einen Bowdenzug auf einem Kugelgelenk, und Anwendung zu der Schaltvorrichtung für ein Zahnräderwechselgetriebe
Device for connecting a remote control cable end fitting to a ball joint and its application in a gearbox actuator

(30) Priorité: 17.02.1997 FR 9701815
(43) Date de publication de la demande: 19.08.1998
(73) Titulaire: Dura Automotive Systems, 91924 Bondoufle (FR)
(72) Inventeur: Vicogne, Sylvain, 60370 Berthecourt (FR)
(74) Mandataire: Schrimpf, Robert

(56) Documents cités:
- US-A- 5 163 338
- US-A- 5 265 495

## Description

L'invention concerne un dispositif pour raccorder un embout d'un câble de commande à distance à une rotule.

Une application importante de ce dispositif est le raccordement du câble de commande d'une boîte de vitesses à la rotule de la boîte et/ou à la rotule du levier.

Du document US 5 163 338 A est connu un tel dispositif, qui comprend une embase et une chape à monter sur l'embase.
L'embase est une pièce allongée présentant une extrémité adaptée pour son raccordement au câble et une gorge longitudinale définie par deux faces en vis à vis présentant des stries dans laquelle peut être enfoncée la chape comportant des faces extérieure pourvu des stries. L'embase comporte un logement dans lequel la rotule peut être introduite et retenue.
Une barre au extrémité du câble comporte une rainure coopérant avec des doigts de la chape pour déterminer par clipsage un premier degré d'enfoncement de la chape dans la gorge où la chape peut coulisser le long de la gorge.
Des rainures longitudinales formées sur l'embase coopèrent avec des rebords de la chape pour déterminer par clipsage un deuxième degré d'enfoncement de la chape dans la gorge où la chape est verrouillée dans la gorge par l'interpénétration des stries des faces de la chape et des stries des faces de l'embase en sorte que la position de blocage de la chape dans la gorge puisse être choisie à volonté parmi une pluralité de positions réparties dans la longueur de la gorge et correspondant à des distantes différentes entre l'extrémité et la chape.

Le document US 5 265 495 A décrit un dispositif pour raccorder une rotule à l'extrémité d'un câble de commande à distance, qui comprend une embase et une chape à monter sur l'embase. La chape comporte deux douilles à bride et un logement dans lequel la rotule peut être introduite et retenue.
L'embase présente une extrémité adaptée pour son raccordement au câble et un logement dans laquelle peut être enfoncée la chape par clipsage des deux douilles à bride.

Un but de l'invention est de fournir un dispositif qui permette au monteur de réaliser une mise à longueur manuelle du câble du seul fait du raccordement de la rotule.

Un autre but de l'invention est de réaliser la filtration des vibrations ailleurs qu'au niveau de la rotule ou de la butée de gaine.

Le dispositif de l'invention est un dispositif qui comprend une première pièce dite embase et une deuxième pièce dite chape à monter l'une sur l'autre, l'embase présentant une extrémité adaptée pour son raccordement à l'embout, la chape comportant un logement dans lequel la rotule peut être introduite et retenue, l'embase déterminant une gorge longitudinale dans laquelle peut être enfoncée la chape, ladite embase et ladite chape comportant des moyens coopérant pour déterminer par clipsage un premier degré d'enfoncement de la chape dans la gorge où la chape peut coulisser le long de la gorge et des moyens coopérant pour déterminer par clipsage un deuxième degré d'enfoncement de la chape dans la gorge où la chape ne peut plus coulisser dans la gorge du fait de la pénétration d'un relief formé sur la chape dans une cavité correspondante formée dans l'embase, l'embase présentant une pluralité de telles cavités en sorte que la position de blocage de la chape dans la gorge puisse être choisie à volonté parmi une pluralité de positions réparties dans la longueur de la course de coulissement correspondant à des distances différentes entre ladite extrémité et la chape.

Dans des modes de réalisation préférés, ce dispositif présente encore une ou plusieurs des caractéristiques suivantes :
- lesdites cavités de l'embase sont déterminées par des stries parallèles.
- lesdites cavités sont formées sur les deux côtés longitudinaux de la gorge.
- le relief de la chape est déterminé par une pluralité de stries parallèles aptes à s'engager entre les stries de l'embase.
- ladite gorge a une section droite trapézoïdale.
- les degrés d'enfoncement sont déterminés par des rainures longitudinales formées à deux niveaux sur l'embase et dans lesquelles peut être clipsé au moins un rebord de la chape.
- ledit logement présente une ouverture d'introduction de la rotule dans le logement qui est située en sorte que la dimension d'introduction de la rotule dans le logement corresponde à la direction d'enfoncement de la chape dans la gorge.
- l'ouverture d'introduction de la rotule dans le logement de la chape est déterminé par des parois qui peuvent s'écarter pour permettre l'introduction de la rotule et qui reviennent l'une vers l'autre sous l'effet de l'enfoncement de la chape dans la gorge, en sorte que la rotule soit prisonnière dans le logement.
- l'embase est conformée à ladite extrémité pour recevoir par glissement un talon situé à l'extrémité de l'embout du câble.

On décrira ci-après un exemple de réalisation d'un dispositif selon l'invention, en référence aux figures des dessins joints selon lesquels :
La figure 1 est un schéma général d'un ensemble de commande à câble d'une boîte de vitesses automatique équipé d'un dispositif selon l'invention, avant raccordement de la rotule ;
la figure 2 est un schéma analogue à celui de la figure 1, après raccordement de la rotule :
la figure 3 est un schéma de l'embase du dispositif de l'invention avant son montage sur un embout de câble :
la figure 4 est un schéma analogue à celui de la figure 3 après montage de l'embase sur l'embout de câble :
la figure 5 est un schéma de l'embase montée sur l'embout et séparée de la chape :
la figure 6 est une coupe de l'embase et de la chape par un plan transversal, l'embase étant en position de glissement au début de la phase d'introduction de la rotule dans le logement de la chape, et
la figure 7 est une coupe analogue à celle de la figure 6, à la fin de la phase de mise en place de la rotule dans le logement de la chape.

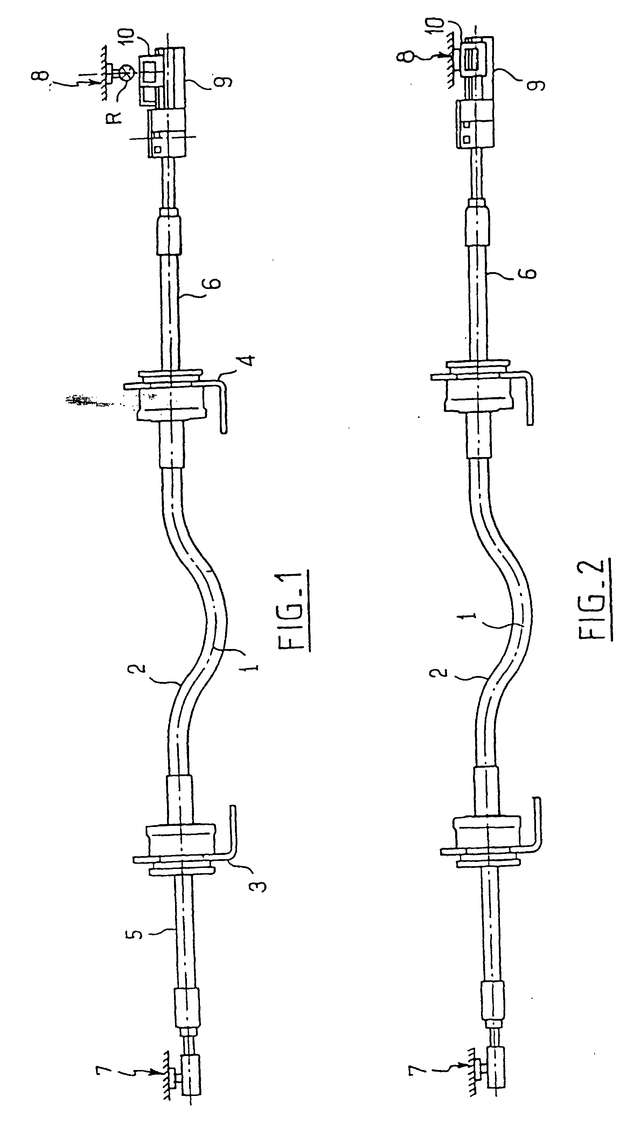

les figures 1 et 2 montrent le schéma d'un ensemble de commande à câble d'une boîte de vitesses automatique. De façon en soi connue, la câble (1) passe dans une gaine (2) fixée à ses extrémités par des butées (3, 4) liées au véhicule. Les deux extrémités du câble sont munies d'embouts (5, 6) qui sont raccordés de façon appropriée à la rotule (non visible) du levier de vitesses schématisé en (7) et à la rotule R de la boîte de vitesses schématisée en (8).

On décrira ci-après l'application du dispositif de l'invention au raccordement de câble de commande au pivot de la boîte de vitesses.

Le dispositif comprend une embase (9) et une chape (10).

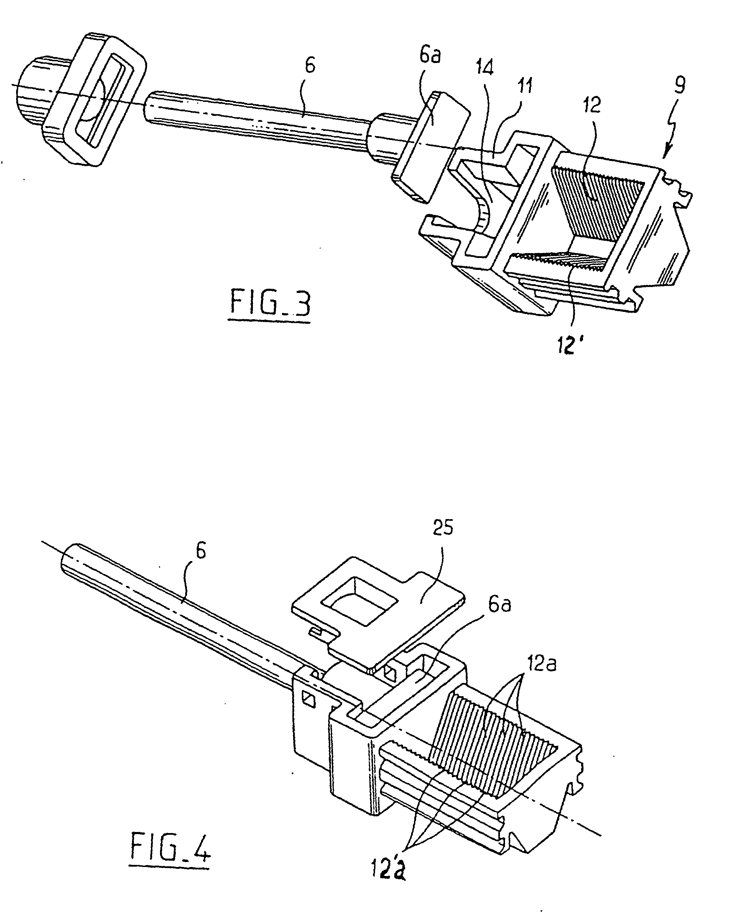

L'embase (9) (figures 3 et 4) est une pièce allongée qui est agencée à une extrémité (11) pour être fixée à l'embout (6) et qui présente une gorge rectiligne longitudinale (19) définie par deux faces obliques en vis à vis (12, 12') disposées comme les deux côtés inclinés d'un trapèze et qui présentent des stries (12a, 12'a) dans des plans transversaux par rapport à la longueur de la gorge.

L'extrémité (11) détermine une glissière (14) dans laquelle peut être glissé un talon (6a) formé à l'extrémité de l'embout (6), le talon étant ensuite maintenu en place par un couvercle (25) clipsé dans l'ouverture de la glissière.

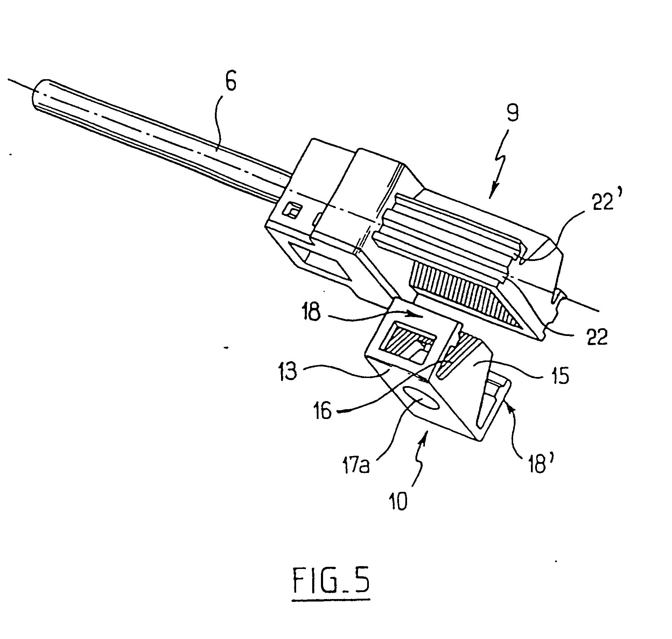

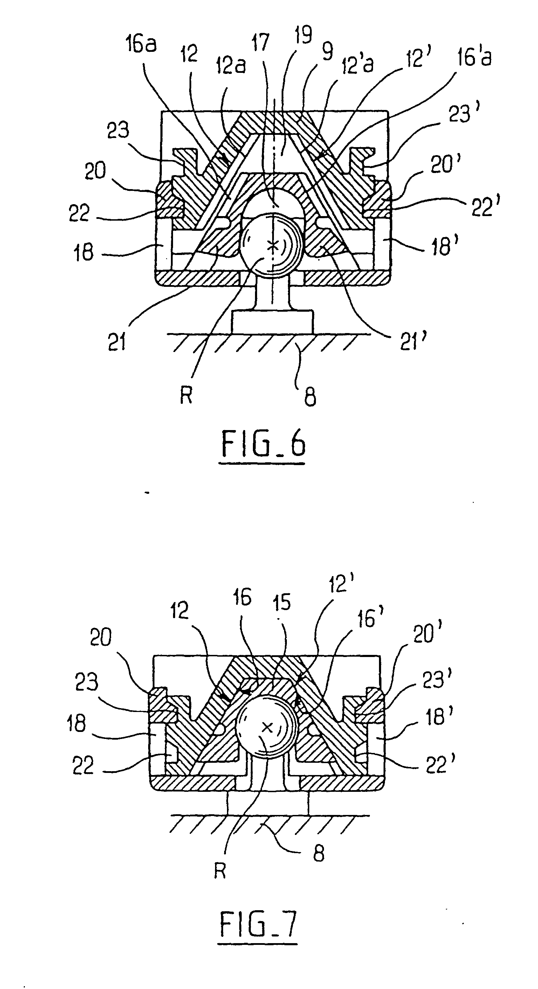

La chape (10)(figures 5 et 6) présente une partie centrale (15) de section droite trapézoïdale qui comporte un logement (17) accessible depuis une entrée (17a) sur une face (13) de la partie centrale pour recevoir la rotule (R) de la boîte de vitesses. Les faces inclinées (16, 16') de la partie centrale présentent des stries (16a, 16'a) comme les faces (12) et (12') de l'embase mais ces stries ne sont pas au contact de ces faces (12) et (12') lorsque cette partie centrale est enfoncée dans la gorge jusqu'à un premier degré d'enfoncement (figure 6).

La chape présente deux ailes (18, 18') qui se trouvent à l'extérieur de l'embase lorsque la partie centrale de la chape est enfoncée dans la gorge et ces deux ailes sont munies de rebords (20, 20') dirigés vers l'intérieur et qui peuvent être clipsés dans des rainures longitudinales (22, 22') formées à un premier niveau sur les côtés extérieurs de l'embase, déterminant ainsi un premier degré d'enfoncement de la chape dans la gorge (6) ou dans des rainures analogues (23, 23') formées à un deuxième niveau sur les côtés extérieurs de l'embase et qui déterminent un deuxième degré d'enfoncement de la chape dans la gorge (figure 7).

Dans le premier degré d'enfoncement la chape peut coulisser sur l'embase tandis que dans le deuxième degré d'enfoncement, la chape est verrouillée en position par l'interpénétration des stries des faces (16, 16') de la chape et des stries des faces (12 ) et (12') de l'embase.

L'ouverture (17a) du logement (17) est déterminée par des lèvres (21, 21') qui définissent une ouverture plus étroite que le diamètre de la rotule pour l'accès au logement (17) mais qui peuvent s'écarter l'une de l'autre pour laisser passer la rotule (figure 6) et se rapprocher ensuite du fait de l'enfoncement de la chape dans son deuxième degré d'enfoncement pour emprisonner la rotule dans le logement (figure 7).

L'invention n'est pas limitée à cette réalisation qui n'a été donnée qu'à titre d'exemple. Des variantes de réalisation peuvent notamment être obtenues en remplaçant des moyens décrits par des moyens fonctionnellement équivalents.

## Revendications

1. Dispositif pour raccorder une rotule (R) à l'extrémité d'un câble de commande à distance (1), qui comprend une première pièce (9) dite embase et une deuxième pièce (10) dite chape à monter sur la première pièce, l'embase présentant une extrémité (11) adaptée pour son raccordement au câble et la chape comportant un logement (17) dans lequel la rotule (R) peut être introduite et retenue, l'embase déterminant une gorge longitudinale (19) dans laquelle peut être enfoncée la chape, ladite embase et ladite chape comportant des moyens (20, 20' ; 22, 22') coopérant pour déterminer par clipsage un premier degré d'enfoncement de la chape dans la gorge où la chape peut coulisser le long de la gorge et des moyens (20, 20' ; 23, 23') coopérant pour déterminer par clipsage un deuxième degré d'enfoncement de la chape dans la gorge où la chape ne peut plus coulisser dans la gorge du fait de la pénétration d'un relief (16a, 16'a) formé sur la chape dans une cavité correspondante (12a, 12'a) formée dans l'embase, l'embase présentant une pluralité de telles cavités en sorte que la position de blocage de la chape dans la gorge puisse être choisie à volonté parmi une pluralité de positions réparties dans la longueur de la gorge et correspondant à des distances différentes entre ladite extrémité et la chape.

2. Dispositif selon la revendication 1, dans lequel les cavités de l'embase (9) sont déterminées par des stries parallèles (12a, 12'a).

3. Dispositif selon la revendication 1 ou 2, dans lequel lesdites cavités (12a, 12'a) sont formées sur les deux côtés longitudinaux (12, 12') de la gorge (19).

4. Dispositif selon l'une des revendications 2 et 3, dans lequel le relief (16a, 16'a) de la chape est déterminé par une pluralité de stries parallèles aptes à s'engager entre les stries de l'embase.

5. Dispositif selon l'une des revendications 1 à 4, dans lequel ladite gorge (19) a une section droite trapézoïdale.

6. Dispositif selon l'une des revendications 1 à 5, dans lequel les degrés d'enfoncement sont déterminés par des rainures longitudinales (22, 22' ; 23, 23') formées à deux niveaux sur l'embase et dans lesqtielles peut être clipsé au moins un rebord (20, 20') du la chape.

7. Dispositif selon l'une des revendications 1 à 6, dans lequel ledit logement (17) présente une ouverture (17a) d'introduction de la rotule dans le logement qui est située en sorte que la direction d'introduction de la rotule dans le logement corresponde à la direction d'enfoncement de la chape dans la gorge.

8. Dispositif selon l'une des revendications 1 à 7, dans lequel l'ouverture (17a) d'introduction de la rotule dans le logement (17) est déterminé par des lèvres (21, 21') qui peuvent s'écarter pour permettre l'introduction de la rotule et qui reviennent l'une vers l'autre sous l'effet de l'enfoncement de la chape dans la gorge pour que la rotule soit retenue prisonnière dans le logement.

9. Dispositif selon l'une des revendications 1 à 8, dans lequel l'embase comporte une glissière (14) à son extrémité (11) pour recevoir par glissement un talon (6a) situé à l'extrémité de l'embout (6) du câble (1).

10. Application d'un dispositif selon l'une des revendications 1 à 9 à un système de commande d'une boîte de vitesses.

## Claims

1. Device for connecting a ball (R) to the end of a long-distance control cable (1), which device comprises a first part (9), referred to as a base, and a second part (10), referred to as a cap, for mounting on the first part, the base having an end (11) suitable for its connection to the cable and the cap comprising a seat (17) into which the ball (R) can be introduced and held in place, the base determining a longitudinal throat (19) in which the cap can be embedded, the said base and the said cap comprising means (20, 20'; 22, 22') which cooperate so as to determine by clip-fastening a first degree of embedment of the cap in the throat, in which the cap can slide along the throat, and means (20, 20'; 23, 23') which cooperate so as to determine by clip-fastening a second degree of embedment of the cap in the throat, in which the cap can no longer slide in the throat owing to the penetration of a relief (16a, 16'a) formed on the cap into a corresponding cavity (12a, 12'a) formed in the base, the base having a plurality of such cavities such that the jamming position of the cap in the throat can be optionally chosen from amongst a plurality of positions distributed along the length of the throat and corresponding to different distances between the said end and the cap.

2. Device according to Claim 1, in which the cavities in the base (9) are determined by parallel corrugations (12a, 12'a).

3. Device according to Claim 1 or 2, in which the said cavities (12a, 12'a) are formed on the two longitudinal sides (12, 12') of the throat (19).

4. Device according to either of Claims 2 and 3, in which the relief (16a, 16'a) on the cap is determined by a plurality of parallel corrugations fit for engaging between the corrugations in the base.

5. Device according to one of Claims 1 to 4, in which the said throat (19) has a trapezoidal cross section.

6. Device according to one of Claims 1 to 5, in which the degrees of embedment are determined by longitudinal grooves (22, 22'; 23, 23') formed at two levels on the base and in which at least one edge (20, 20') of the cap can be clip-fastened.

7. Device according to one of Claims 1 to 6, in which the said seat (17) has an opening (17a) for introducing the ball into the seat, which opening is situated such that the direction of introduction of the ball into the seat corresponds to the direction of embedment of the cap in the throat.

8. Device according to one of Claims 1 to 7, in which the opening (17a) for introducing the ball into the seat (17) is determined by lips (21, 21') which can part to allow the introduction of the ball and which re-converge under the effect of the embedment of the cap in the throat, such that the ball is held captive in the seat.

9. Device according to one of Claims 1 to 8, in which the base comprises a slide (14) at its end (11) in order to receive, by sliding, a heel (6a) situated at the end of the terminal (6) of the cable (1).

10. Application of a device according to one of Claims 1 to 9 to a control system for a gearbox.

## Patentansprüche

1. Vorrichtung zum Anschließen eines Kugelkopfs (R) am Ende eines Fernbedienungskabels Ferne (1), die ein erstes, Basiselement genanntes Teil (9) und ein zweites, Gelenkaufnahme genanntes Teil (10), das auf dem ersten Teil montiert wird, umfaßt, wobei das Basiselement ein Ende (11) aufweist, das zu seinem Anschluß an das Kabel ausgebildet ist und wobei die Gelenkaufnahme ein Lager (17) umfaßt, in das der Kugelkopf (R) eingeführt und in ihm festgehalten werden kann, wobei das Basiselement eine Längsaushöhlung (19) festlegt, in die die Gelenkaufnahme eingedrückt werden kann, wobei das Basiselement und die Gelenkaufnahme Mittel (20, 20'; 22, 22'), die zusammenwirken, um durch einen Schnappverschluß eine erste Eindrückstufe der Gelenkaufnahme in die Aushöhlung festzulegen, in der die Gelenkaufnahme entlang der Aushöhlung verschiebbar ist, und Mittel (20, 20'; 23, 23'), die zusammenwirken, um durch einen Schnappverschluß eine zweite Eindrückstufe der Gelenkaufnahme in die Aushöhlung festzulegen, in der die Gelenkaufnahme aufgrund des Eingreifens einer auf der Gelenkaufnahme ausgebildeten Erhöhung (16a, 16'a) in eine entsprechende im Basiselement ausgebildeten Aussparung (12a, 12'a) nicht mehr in der Aushöhlung verschiebbar ist, umfassen, wobei das Basiselement eine Anzahl solcher Aussparungen aufweist, damit die Feststellposition der Gelenkaufnahme in der Aushöhlung nach Belieben unter einer Anzahl von Positionen, die über die Länge der Aushöhlung verteilt sind und die verschiedenen Abständen zwischen dem Ende und der Gelenkaufnahme entsprechen, ausgewählt werden kann.

2. Vorrichtung nach Anspruch 1, in der die Aussparungen des Basiselements (9) durch parallele Rillen (12a, 12'a) festgelegt sind.

3. Vorrichtung nach Anspruch 1 oder 2, in der die Aussparungen (12a, 12'a) auf den beiden Längsseiten (12, 12') der Aushöhlung (19) ausgebildet sind.

4. Vorrichtung nach einem der Ansprüche 2 und 3, in der die Erhöhung (16a, 16'a) der Gelenkaufnahme durch eine Anzahl paralleler Rillen festgelegt ist, die dazu geeignet sind, in die Rillen des Basiselements einzugreifen.

5. Vorrichtung nach einem der Ansprüche 1 bis 4, in der die Aushöhlung (19) einen trapezförmigen Querschnitt hat.

6. Vorrichtung nach einem der Ansprüche 1 bis 5, in der die Eindrückstufen durch Längsnuten (22, 22'; 23, 23') festgelegt sind, die auf zwei Höhen auf dem Basiselement ausgebildet sind und in die wenigstens eine Leiste (20, 20') der Gelenkaufnahme einschnappen kann.

7. Vorrichtung nach einem der Ansprüche 1 bis 6, in der das Lager (17) eine Öffnung (17a) zum Einführen des Kugelkopfes in das Lager aufweist, die derart angeordnet ist, daß die Einführungsrichtung des Kugelkopfes in das Lager der Eindrückrichtung der Gelenkaufnahme in die Aushöhlung entspricht.

8. Vorrichtung nach einem der Ansprüche 1 bis 7, in der die Öffnung (17a) zum Einführen des Kugelkopfes in das Lager (17) durch Lippen (21, 21') festgelegt ist, die sich aufspreizen können, um das Einführen des Kugelkopfes zu gestatten, und die sich unter der Wirkung des Eindrückens der Gelenkaufnahme in die Aushöhlung wieder einander annähern, damit der Kugelkopf im Lager festgehalten wird.

9. Vorrichtung nach einem der Ansprüche 1 bis 8, in der das Basiselement an seinem Ende (11) eine Führungsbahn (14) umfaßt, um durch gleitendes Einführen ein Endteil (6a) aufzunehmen, das am Ende des Ansatzstücks (6) des Kabels (1) angeordnet ist.

10. Verwendung einer Vorrichtung nach einem der Ansprüche 1 bis 9 bei einem Bediensystem eines Getriebes.
